# EUROPÄISCHE PATENTSCHRIFT

(11) **EP 3 085 123 B1**
(45) Veröffentlichungstag und Bekanntmachung des Hinweises auf die Patenterteilung: **21.02.2018**
(21) Anmeldenummer: 14809791.8
(22) Anmeldetag: 03.12.2014
(51) Int. Cl.: H04W 4/04, B60R 16/03, H04L 29/08, H04W 84/18, H04L 12/823, H04W 4/02

(54) **VERFAHREN UND SYSTEM ZUR BESTIMMUNG EINER ANZAHL ZU VERWERFENDER FAHRZEUG-ZU-X-BOTSCHAFTEN**
METHOD AND SYSTEM FOR DETERMINING A NUMBER OF VEHICLE-TO-X MESSAGES FOR REJECTION
PROCÉDÉ ET SYSTÈME POUR DÉTERMINER UN NOMBRE DE MESSAGES V2X À REJETER

(30) Priorität: 16.12.2013 DE 102013226117; 19.12.2013 DE 102013226605
(43) Veröffentlichungstag der Anmeldung: 26.10.2016
(73) Patentinhaber: Continental Teves AG & Co. oHG, 60488 Frankfurt (DE); Continental Automotive GmbH, 30165 Hannover (DE)
(72) Erfinder: STÄHLIN, Ulrich, 65760 Eschborn (DE); MENZEL, Marc, 35096 Weimar (Lahn) (DE); KELLING, Enno, 65760 Eschborn (DE); SCHÜRMEIER, Martin, 85101 Lenting (DE)
(74) Vertreter: Wagner, Philipp
(86) Internationale Anmeldenummer: PCT/EP2014/076346
(87) Internationale Veröffentlichungsnummer: WO 2015/090957

(56) Entgegenhaltungen:
- DE-A1-102011 078 704
- US-A1- 2011 080 302
- US-A1- 2011 140 968

## Beschreibung

Die Erfindung betrifft ein Verfahren zur Bestimmung einer Anzahl zu verwerfender Fahrzeug-zu-X-Botschaften gemäß Oberbegriff von Anspruch 1, ein System zur Bestimmung einer Anzahl zu verwerfender Fahrzeug-zu-X-Botschaften gemäß Oberbegriff von Anspruch 13 sowie eine Verwendung des Systems.

### Im Stand der Technik sind bereits

Fahr-zeug-zu-X-Kommunikationssysteme bekannt, die sowohl zur Informationsübertragung zwischen verschiedenen Fahrzeugen (Fahrzeug-zu-Fahrzeug-Kommunikation) als auch zwischen Fahrzeugen und Infrastruktureinrichtungen (Fahr-zeug-zu-Infrastruktur-Kommunikation) geeignet sind. Beide Varianten werden üblicherweise unter dem Oberbegriff Fahr-zeug-zu-X-Kommunikation zusammengefasst. Bei der Fahr-zeug-zu-X Kommunikation besteht allgemein das Problem, dass, z.B. im Unterschied zu klassischen Umfeldsensoren, die Anzahl der erkannten Objekte bzw. die Anzahl der empfangenen Fahr-zeug-zu-X-Botschaften, starken Schwankungen unterliegt. So werden üblicherweise pro Sekunde zwischen zehn und mehreren 100 Fahrzeug-zu-X-Botschaften empfangen. Daher muss stets eine entsprechende Reserve an Rechenleistung vorgehalten werden. Um diese Reserve so gering wie möglich halten zu müssen, ist es weiterhin bekannt, sog. Vorverarbeitungsverfahren anzuwenden, um irrelevante Fahrzeug-zu-X-Botschaften nach dem Empfang möglichst früh in der Verarbeitungskette zu verwerfen. Somit kann Rechenleistung eingespart werden.

In diesem Zusammenhang beschreibt die DE 10 2010 038 640 A1 eine Vorrichtung und ein Verfahren zur Fahrzeug-zu-X-Kommunikation.

Das offenbarte Verfahren basiert auf einer Kombination jeweils unterschiedlicher Kommunikationstechnologien, welche unterschiedliche Eigenschaften aufweisen. Ein erster Kommunikationskanal kann z.B. als Mobilfunkkanal ausgeführt sein, während ein zweiter Kommunikationskanal als WLAN-Kanal ausgeführt ist. Mittels einer senderseitigen Sortierung der zu versendenden Informationen wird festgelegt, welche Information über welchen Kommunikationskanal versendet wird. Gemäß der DE 10 2010 038 640 A1 werden periodisch auftretende oder statische Informationen über den ersten Kanal übertragen, während sicherheitsrelevante Informationen über den zweiten Kanal übertragen werden.

Die DE 10 2008 060 231 A1 beschreibt ein Verfahren zum Selektieren von unterschiedlichen, mittels Fahrzeug-zu-X-Kommunikation übertragenen Daten. Anhand eines Daten-Frames werden die unterschiedlichen empfangenen Daten von einem Datenfilter in der Empfangsvorrichtung unterschieden und beispielsweise an ein Fahrerassistenzsystem oder eine Unterhaltungseinrichtung weitergeleitet. Dies ermöglicht auf einfache Weise eine Sortierung der empfangenen Daten vor deren eigentlicher Verarbeitung.

Aus der DE 10 2010 002 092 A1 ist eine Datenvorverarbeitung für empfangene Fahrzeug-zu-X-Botschaften bekannt, welche einer Weiterleitung der Botschaften an die zugehörigen Anwendungen und Systeme im Fahrzeug sowie deren Verarbeitung durch diese Anwendungen und Systeme vorausgeht. Die Datenvorverarbeitung kann dabei die Überprüfung eines Sicherheitslevels der Botschaft umfassen und zusätzlich eine Datenreduktion ausführen. Die Datenreduktion bewirkt, dass Informationen über bestimmte Objekte oder Situationen ausgeblendet und entsprechend nicht weitergeleitet und verarbeitet werden. So werden etwa Informationen über Objekte, welche zu weit vom empfangenden Fahrzeug entfernt sind bzw. Informationen über Objekte, die vom Fahrzeug erst nach einer bestimmten Zeitspanne erreicht werden, nicht berücksichtigt. Ebenso werden viele örtlich nahe Objekte mit grundsätzlich gleichem Verhalten zu einer Situation zusammengefasst, z.B. zu einem Stau. Auch eine ausschließliche Berücksichtigung von Objekten, welche sich im vorgesehenen Bewegungsschlauch des Fahrzeugs befinden, ist möglich. Die von den einzelnen Anwendungen zu verarbeitende Datenmenge kann dadurch reduziert werden.

Die DE 10 2012 204 880 A1 offenbart ein Verfahren zur Reduzierung der Rechenlast bei einer Datensicherheitsprüfung von mittels Fahrzeug-zu-X-Kommunikation empfangenen Datenpaketen. Die Datensicherheitsprüfung besteht hier aus dem Überprüfen einer mittels kryptografischer Algorithmen verschlüsselten Signatur, welche mit hohem Rechenaufwand verbunden ist und den Einsatz dedizierter Elektronik erforderlich macht. Zur Reduzierung der Rechenlast wird zunächst eine Vorverarbeitung der empfangenen Fahrzeug-zu-X-Botschaften vorgenommen, welche diese in un-terschiedliche Kategorien priorisiert. Die Priorisierung kann dabei an Hand unterschiedlicher Kriterien, wie z.B. Abstand des Senders zum Empfänger oder TTC (time to collision) des Senders zum Empfänger erfolgen.

Aus der DE 10 2011 078 704 A1 geht ein Datenauswahlverfahren zur Verminderung des Dekodierrechenaufwands eines Fahrzeug-zu-X-Kommunikationssystems hervor, wobei auf Grundlage eines unkodierten Kopfdatenanteils von empfangenen Fahrzeug-zu-X-Botschaften eine Gewichtung von untereinander in wenigstens zwei Kategorien vorgenommen wird und eine Dekodierung eines kodierten Nutzdatenanteils der Fahrzeug-zu-X-Botschaften gewichtungsabhängig erfolgt. Weiterhin wird eine Dekodierung von empfangenen Fahrzeug-zu-X Nachrichten nach Maßgabe einer Gewichtung vorgenommen, wobei die Gewichtung in eine der Anzahl der empfangenen Fahrzeug-zu-X-Botschaften entsprechende Anzahl von Kategorien erfolgt, bei welcher die Nutzdatenanteile der empfangenen Fahrzeug-zu-X-Botschaften in absteigender Gewichtungsreihenfolge dekodiert werden bis die Rechenkapazität erschöpft ist oder alle Nutzdatenanteile der empfangenen Fahrzeug-zu-X-Botschaften dekodiert sind.

Die im Stand der Technik bekannten Verfahren sind jedoch insofern nachteilbehaftet, als dass diese bei der Bestimmung der Anzahl der zu verwerfenden bzw. der zu verarbeitenden Fahrzeug-zu-X-Botschaften zu wenig Rücksicht auf die tatsächlich zur Verfügung stehende Rechenleistung nehmen. Daher ist es gemäß dem Stand der Technik stets notwendig, eine Rechenleistungsreserve vorzuhalten.

Es ist eine Aufgabe der Erfindung, eine besser auf die vorhandene Rechenleistung abgestimmte Vorverarbeitung für empfangene Fahrzeug-zu-X-Botschaften vorzuschlagen.

Diese Aufgabe wird erfindungsgemäß durch das Verfahren zur Bestimmung einer Anzahl zu verwerfender Fahr-zeug-zu-X-Botschaften gemäß Anspruch 1 gelöst.

Die Erfindung betrifft ein Verfahren zur Bestimmung einer Anzahl zu verwerfender Fahrzeug-zu-X-Botschaften, wobei in einem Arbeitszyklus einer Fahrzeug-zu-X-Kommunikationseinheit Fahrzeug-zu-X-Botschaften empfangen werden, wobei in dem Arbeitszyklus eine Anzahl empfangener Fahrzeug-zu-X-Botschaften bestimmt wird, wobei in dem Arbeitszyklus eine vorhandene Rechenleistung zur Verfügung steht und wobei in dem Arbeitszyklus die Bestimmung der Anzahl zu verwerfender Fahrzeug-zu-X-Botschaften nach Maßgabe der Anzahl empfangener Fahrzeug-zu-X-Botschaften erfolgt. Daraus ergibt sich der Vorteil, dass die vorhandene Rechenleistung nicht auf das Vorhalten von vergleichsweise großen Rechenleistungsreserven ausgelegt sein muss, da mit zunehmender Anzahl empfangener Fahrzeug-zu-X-Botschaften zunehmend mehr Fahrzeug-zu-X-Botschaften verworfen werden, also die Anzahl zu verwerfender Fahrzeug-zu-X-Botschaften ebenfalls steigt. Dies ermöglicht also die Verwendung von vergleichsweise weniger rechenleistungsfähigen und damit kostengünstigeren elektronischen Rechenmodulen zur Verarbeitung der empfangenen Fahrzeug-zu-X-Botschaften. Weiterhin wird durch das erfindungsgemäße Verfahren die vorhandene Rechenleistung in der Regel besser ausgeschöpft, da, wie beschrieben, das Vorhalten einer in der Regel nicht genutzten Reserve überflüssig ist.

Bevorzugt wird das erfindungsgemäße Verfahren von bzw. in einem Empfänger der Fahrzeug-zu-X-Botschaften ausgeführt. Sowohl der Empfänger als auch der oder die Absender der Fahrzeug-zu-X-Botschaften sind dabei besonders bevorzugt Kraftfahrzeuge.

Unter dem Begriff "Arbeitszyklus" wird im Sinne der Erfindung ein Arbeitstakt der Fahrzeug-zu-X-Kommunikationseinheit verstanden, der mehrere Schritte, wie z.B. das Empfangen der Fahrzeug-zu-X-Botschaften, das Bestimmen der Anzahl empfangener Fahrzeug-zu-X-Botschaften, das Bestimmen der Anzahl zu verwerfender Fahrzeug-zu-X-Botschaften und das Verarbeiten von Fahrzeug-zu-X-Botschaften umfassen kann.

Insbesondere erfolgt die Bestimmung der Anzahl zu verwerfender Fahrzeug-zu-X-Botschaften sogar ausschließlich nach Maßgabe der Anzahl empfangener Fahrzeug-zu-X-Botschaften. Daraus ergibt sich der Vorteil, dass das erfindungsgemäße Verfahren besonders einfach und rechenleistungseffizient ist.

Weiterhin wird das erfindungsgemäße Verfahren zweckmäßigerweise in Verbindung mit an sich bekanntem Vorverarbeitungsverfahren ausgeführt. Beispielsweise kann das erfindungsgemäße Verfahren in die bekannten Vorverarbeitungsverfahren derart integriert bzw. eingegliedert bzw. mit diesen verkoppelt sein, dass es eine durch die bekannten Vorverarbeitungsverfahren vorgenommene Klassifikation der empfangenen Fahrzeug-zu-X-Botschaften derart beeinflusst bzw. steuert, dass die Anzahl der als "zu verwerfend" klassifizierten Fahrzeug-zu-X-Botschaften gemäß dem erfindungsgemäßen Verfahren eingestellt wird. Die eigentliche Klassifikation jedoch erfolgt weiterhin durch das bekannte Vorverarbeitungsverfahren.

Generell steigt die für das erfindungsgemäße Verfahren aufzuwendende Rechenleistung bzw. die im Zuge der Ausführung des erfindungsgemäßen Verfahrens aufzuwendende Rechenleistung mit der Anzahl empfangener Fahrzeug-zu-X-Botschaften und insbesondere mit der Anzahl zu verarbeitender Fahrzeug-zu-X-Botschaften. Mit abnehmender Anzahl empfangener Fahrzeug-zu-X-Botschaften und insbesondere mit abnehmender Anzahl zu verarbeitender Fahrzeug-zu-X-Botschaften nimmt die aufzuwendende Rechenleistung hingegen ab.

Die Summe der Anzahl zu verarbeitender Fahrzeug-zu-X-Botschaften und der Anzahl zu verwerfender Fahrzeug-zu-X-Botschaften entspricht der Anzahl empfangener Fahrzeug-zu-X-Botschaften.

Wie bereits beschrieben, steigt mit zunehmender Anzahl empfangener Fahrzeug-zu-X-Botschaften die Anzahl zu verwerfender Fahrzeug-zu-X-Botschaften. Umgekehrt sinkt die Anzahl zu verwerfender Fahrzeug-zu-X-Botschaften mit abnehmender Anzahl empfangener Fahrzeug-zu-X-Botschaften. Dies geschieht jeweils bevorzugt im Wesentlichen proportional zur Anzahl empfangener Fahrzeug-zu-X-Botschaften.

Es ist vorteilhaft, dass die Fahrzeug-zu-X-Botschaft mittels mindestens einer der folgenden Verbindungsarten gesendet bzw. empfangen wird:
- WLAN-Verbindung, insbesondere nach IEEE 802.11p,
- ISM-Verbindung (Industrial, Scientific, Medical Band),
- Bluetooth®-Verbindung,
- ZigBee-Verbindung,
- UWB-Verbindung (Ultra Wide Band),
- WiMax®-Verbindung (Worldwide Interoperability for Microwave Access),
- Infrarotverbindung und
- Mobilfunkverbindung.

Diese Verbindungsarten bieten dabei unterschiedliche Vorteile, je nach Art, Wellenlänge und verwendetem Datenprotokoll. So ermöglichen einige der genannten Verbindungsarten z.B. eine vergleichsweise hohe Datenübertragungsrate und einen vergleichsweise schnellen Verbindungsaufbau, andere hingegen eignen sich weitestgehend gut zur Datenübertragung um Sichthindernisse herum. Durch die Kombination und gleichzeitige bzw. parallele Nutzung mehrerer dieser Verbindungsarten ergeben sich weitere Vorteile, da so auch Nachteile einzelner Verbindungsarten ausgeglichen werden können.

Bevorzugt ist es vorgesehen, dass Klassifizierungsparameter eines Vorverarbeitungsverfahrens in dem Arbeitszyklus derart angepasst werden, dass die bestimmte Anzahl zu verwerfender Fahrzeug-zu-X-Botschaften eine Anzahl zu verarbeitender Fahrzeug-zu-X-Botschaften hinterlässt, welche die vorhandene Rechenleistung in dem Arbeitszyklus ausschöpft ohne diese zu überschreiten. Durch die Anpassung der Klassifizierungsparameter eines Vorverarbeitungsverfahrens, insbesondere eines an sich bekannten Vorverarbeitungsverfahrens, kann mittels des erfindungsgemäßen Verfahrens auf vergleichsweise einfache Art und Weise die Anzahl zu verwerfender bzw. zu verarbeitender Fahrzeug-zu-X-Botschaften eingestellt werden. Somit greift das erfindungsgemäße Verfahren also über die Anpassung der Klassifizierungsparameter in ein an sich bekanntes Vorverarbeitungsverfahren ein. Trotz allem kann es vorteilhaft sein, eine vergleichsweise geringe Rechenleistungsreserve vorzuhalten, um z.B. im Falle von Fehlbestimmungen der Anzahl empfangener Fahrzeug-zu-X-Botschaften bzw. der Anzahl zu verwerfender Fahrzeug-zu-X-Botschaften nicht zuviel Rechenleistung anzufordern und somit ggf. Systeminstabilitäten zu erzeugen.

Es ist vorteilhaft, dass die Klassifizierungsparameter über eine Anpassung von Schwellwerten angepasst werden. Die Schwellwerte können dabei beispielsweise für die Zuordnung einer Fahrzeug-zu-X-Botschaft zu einer bestimmten Klassifikationsstufe, wie etwa "auszuwertend" oder "zu verwerfend" maßgebend sein. Dies stellt eine besonders einfache und effektive Möglichkeit dar, die Anzahl zu verwerfender Fahrzeug-zu-X-Botschaften einzustellen.

Ebenso ist es vorteilhaft, dass die Klassifizierungsparameter über eine Anpassung von herangezogenen Relevanzkriterien angepasst werden. Relevanzkriterien können z.B. eine Empfangsrichtung der Fahrzeug-zu-X-Botschaft, ein Alter der Fahrzeug-zu-X-Botschaft bzw. eine Art der Fahrzeug-zu-X-Botschaft sein. Je mehr Relevanzkriterien dabei herangezogen werden bzw. je enger die herangezogenen Relevanzkriterien gewählt werden, desto weiter kann die Anzahl zu verwerfender Fahrzeug-zu-X-Botschaften erhöht werden.

Insbesondere ist es vorteilhaft, dass die Klassifizierungsparameter für unterschiedliche kommunikationsbasierte Assistenzsysteme unterschiedlich angepasst werden. Somit kann den unterschiedlichen Anforderungen der unterschiedlichen kommunikationsbasierten Assistenzsysteme Rechnung getragen werden. Sicherheitskritische kommunikationsbasierte Assistenzsysteme werden dabei bevorzugt weniger durch Verwerfen von für sie relevanten Fahrzeug-zu-X-Botschaften eingeschränkt als nicht-sicherheitskritische kommunikationsbasierte Assistenzsysteme.

Weiterhin ist es insbesondere vorteilhaft, dass die Klassifizierungsparameter eine Entfernung eines Absenders einer Fahrzeug-zu-X-Botschaft zu einem Empfänger der Fahr-zeug-zu-X-Botschaft umfassen. Je größer dabei die Entfernung des Absenders der Fahrzeug-zu-X-Botschaft zum Empfänger der Fahrzeug-zu-X-Botschaft ist, desto eher wird die Fahr-zeug-zu-X-Botschaft als "zu verwerfend" klassifiziert. Ebenso ist es insbesondere vorteilhaft, dass die Klassifi-zierungsparameter eine Empfangsfeldstärke der Fahr-zeug-zu-X-Botschaft umfassen. Je geringer dabei die Emp-fangsfeldstärke der Fahrzeug-zu-X-Botschaft ist, desto eher wird die Fahrzeug-zu-X-Botschaft als "zu verwerfend" klassifiziert.

Außerdem ist es insbesondere vorteilhaft, dass die Klassifizierungsparameter einen Erstellungszeitpunkt der Fahrzeug-zu-X-Botschaft umfassen. Der Erstellungszeitpunkt beschreibt das Alter der Fahrzeug-zu-X-Botschaft. Je weiter der Erstellungszeitpunkt der Fahrzeug-zu-X-Botschaft dabei in der Vergangenheit liegt, je größer also das Alter der Fahrzeug-zu-X-Botschaft ist, desto eher wird die Fahr-zeug-zu-X-Botschaft als "zu verwerfend" klassifiziert.

Des Weiteren ist es insbesondere vorteilhaft, dass die Klassifizierungsparameter eine Richtung, aus der die Fahr-zeug-zu-X-Botschaft empfangen wurde, umfassen. Je weiter die Richtung, aus der die Fahrzeug-zu-X-Botschaft empfangen wurde, von der voraussichtlichen Fahrtrichtung des Empfängers abweicht, desto eher kann die Fahrzeug-zu-X-Botschaft z.B. als "zu verwerfend" klassifiziert werden.

Weiterhin ist es insbesondere vorteilhaft, dass die Klassifizierungsparameter eine Richtung eines in der Fahr-zeug-zu-X-Botschaft beschriebenen Ereignisses umfassen. Je weiter die Richtung des in der Fahrzeug-zu-X-Botschaft be-schriebenen Ereignisses dabei von der voraussichtlichen Fahrtrichtung des Empfängers abweicht, desto eher kann die Fahrzeug-zu-X-Botschaft z.B. als "zu verwerfend" klassifiziert werden.

Schließlich ist es insbesondere vorteilhaft, dass die Klassifizierungsparameter eine Anzahl an Weiterleitungsprozessen vom Absender der Fahrzeug-zu-X-Botschaft bis zum Empfänger der Fahrzeug-zu-X-Botschaft umfassen. Unter dem Begriff "Absender" wird im Sinne der Erfindung dabei der ursprünglicher Absender und nicht eine Zwischenstation oder ein Zwischensender verstanden, welche bzw. welcher die Fahrzeug-zu-X-Botschaft empfängt und anschließend erneut versendet, also weiterleitet. Diese Zwischenstationen oder Zwischensender sind in der Regel Kraftfahrzeuge, können aber auch Infrastruktureinrichtungen sein. Je größer die Anzahl an Weiterleitungsprozessen vom Absender der Fahrzeug-zu-X-Botschaft bis zum Empfänger der Fahr-zeug-zu-X-Botschaft ist, desto eher wird die Fahr-zeug-zu-X-Botschaft als "zu verwerfend" klassifiziert.

Es ist bevorzugt, dass die Bestimmung der Anzahl zu verwerfender Fahrzeug-zu-X-Botschaften auf einem elektronischen Rechenwerk ausgeführt wird, welches unabhängig von einem die kommunikationsbasierten Assistenzsysteme ausführenden elektronischen Rechenwerk arbeitet. Somit ist also eine Trennung zwischen der physikalischen Verarbeitung der Fahrzeug-zu-X-Botschaften in den bzw. für die kommunikationsbasierten Assistenzsysteme sowie der physikalischen Vorverarbeitung in Sinne des erfindungsgemäßen Verfahrens gewährleistet. Daraus ergibt sich der Vorteil, dass die oftmals sicherheitskritischen kommunikationsbasierten Assistenzsysteme unabhängig vom erfindungsgemäßen Verfahren ausgeführt werden können. Ein externer Angriff auf die Fahrzeug-zu-X-Kommunikationseinheit, beispielsweise eine sog. "Denial of Service"-Attacke, trifft somit nur dasjenige elektronische Rechenwerk, auf welchem die Bestimmung der Anzahl zu verwerfender Fahrzeug-zu-X-Botschaften erfolgt. Eine Beeinträchtigung der Funktion der kommunikationsbasierten Assistenzsysteme kann in einem derartigen Fall also vermieden werden. Da die kommunikationsbasierten Assistenzsysteme weiterhin funktionsfähig sind, können sie sogar den Angriff erkennen und melden. Anstelle einer physischen Trennung in separate Rechenwerke kann auch eine Trennung der beiden Funktionen in separate Partitionen eines Rechenwerks erfolgen, wobei das Betriebssystem des Rechenwerks diese Funktionalität gewährleisten muss und idealerweise eine feste Vorgabe von verfügbarer Rechenzeit je Partition einhält.

Die Erfindung betrifft weiterhin ein System zur Bestimmung einer Anzahl zu verwerfender Fahrzeug-zu-X-Botschaften, umfassend eine Fahrzeug-zu-X-Kommunikationseinheit und mindestens ein elektronisches Rechenwerk, wobei die Fahr-zeug-zu-X-Kommunikationseinheit in einem Arbeitszyklus Fahrzeug-zu-X-Botschaften empfängt, wobei das System dazu ausgebildet ist, in dem Arbeitszyklus eine Anzahl empfangener Fahrzeug-zu-X-Botschaften zu bestimmen, wobei das elektronische Rechenwerk in dem Arbeitszyklus eine vorhandene Rechenleistung zur Verfügung stellt und wobei das System dazu ausgebildet ist, in dem Arbeitszyklus die Bestimmung der Anzahl zu verwerfender Fahrzeug-zu-X-Botschaften nach Maßgabe der Vielzahl empfangener Fahrzeug-zu-X-Botschaften vorzunehmen. Das erfindungsgemäße System ermöglicht somit die Ausführung des erfindungsgemäßen Verfahrens, was zu den bereits beschriebenen Vorteilen führt.

Bevorzugt ist das mindestens eine elektronische Rechenwerk in die Fahrzeug-zu-X-Kommunikationseinheit integriert und Teil der Fahrzeug-zu-X-Kommunikationseinheit. Mindestens ein zweites elektronisches Rechenwerk ist bevorzugt unabhängig vom ersten elektronischen Rechenwerk und insbesondere nicht in die Fahrzeug-zu-X-Kommunikationseinheit integriert. Mindestens das zweite elektronische Rechenwerk führt vorteilhafterweise kommunikationsbasierte Assistenzsysteme aus. Wie bereits früher beschrieben, kann die Trennung auch durch Softwarepartitionen in einem Rechenwerk geschehen.

Es ist vorgesehen, dass das erfindungsgemäße System dazu ausgebildet ist, das erfindungsgemäße Verfahren auszuführen. Hierzu umfasst das erfindungsgemäße System alle notwendigen Mittel.

Die Erfindung betrifft auch eine Verwendung des erfindungsgemäßen Systems in einem Kraftfahrzeug.

Weitere bevorzugte Ausführungsformen ergeben sich aus den Unteransprüchen und den nachfolgenden Beschreibungen von Ausführungsbeispielen an Hand von Figuren.

Es zeigen
Fig. 1 einen beispielhaften Ablauf des erfindungsgemäßen Verfahrens in Form eines Flussdiagramms und
Fig. 2 beispielhaft ein Funktionsblockdiagramm eines er-findungsgemäßen Systems.

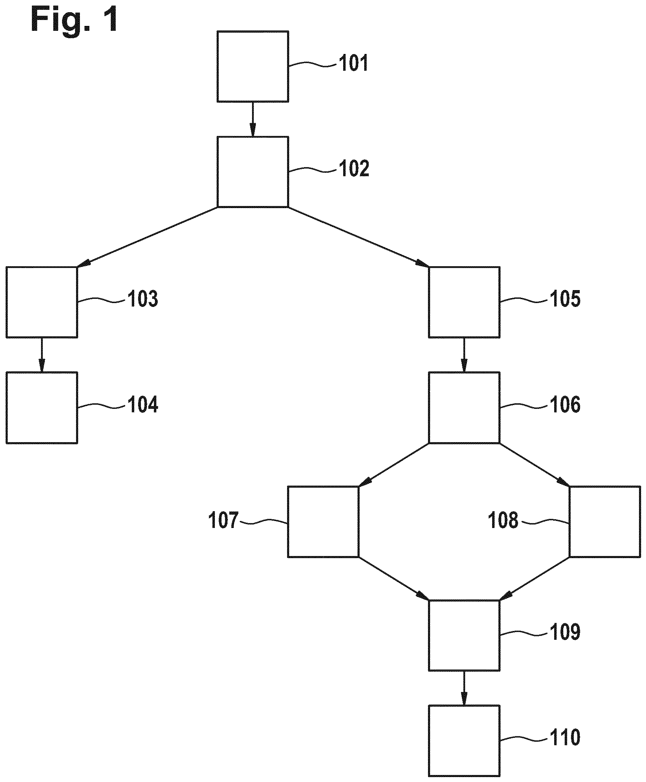

Fig. 1 zeigt einen beispielhaften Ablauf des erfindungsgemäßen Verfahrens in Form eines Flussdiagramms. In Schritt 101 wird zunächst eine Anzahl von Fahrzeug-zu-X-Botschaften von einer Fahrzeug-zu-X-Kommunikationseinheit in einem Kraftfahrzeuge empfangen. Die Fahrzeug-zu-X-Kommunikationseinheit umfasst u.a. ein elektronisches Rechenwerk, welches in jedem Arbeitszyklus eine vorhandene Rechenleistung zur Verfügung stellt. Im folgenden Verfahrensschritt 102 wird nun die Anzahl empfangener Fahrzeug-zu-X-Botschaften bestimmt. Dies erfolgt beispielsgemäß über einen hierzu ausgebildeten Algorithmus, welcher vom elektronischen Rechenwerk ausgeführt wird. Falls in Schritt 103 festgestellt wird, dass die Anzahl empfangener Fahrzeug-zu-X-Botschaften so gering ist, dass die zu ihrer Verarbeitung notwendige Rechenleistung die vorhandene Rechenleistung nicht übersteigen würde, so wird das erfindungsgemäße Verfahren für diesen Arbeitszyklus in Schritt 104 beendet. Falls jedoch in Schritt 105 festgestellt wird, dass die zur Verarbeitung der Anzahl empfangener Fahrzeug-zu-X-Botschaften notwendige Rechenleistung die vorhandene Rechenleistung übersteigen würde, so wird in Schritt 106 nun die Anzahl zu verwerfender Fahrzeug-zu-X-Botschaften bestimmt. Zu verwerfende Fahrzeug-zu-X-Botschaften werden beispielsgemäß keiner weiteren Verarbeitung unterworfen und benötigen entsprechend auch keine weitere Rechenleistung. Die Anzahl zu verwerfender Fahrzeug-zu-X-Botschaften richtet sich an der vorhandenen Rechenleistung aus, welche soweit wie möglich ausgeschöpft, nicht aber überschritten werden soll. Ausgehend von der Anzahl empfangener Fahrzeug-zu-X-Botschaften kann so unter Berücksichtigung der im Arbeitszyklus vorhandenen Rechenleistung die Anzahl zu verwerfender Fahrzeug-zu-X-Botschaften bestimmt werden. Nachdem also die Anzahl zu verwerfender Fahrzeug-zu-X-Botschaften bestimmt wurde, wird in Schritt 107 mittels einer Anpassung von Klassifizierungsparametern in Form von Schwellwerten einer bekannten Vorverarbeitung die Anzahl zu verwerfender Fahrzeug-zu-X-Botschaften vergrößert. Dazu werden die Schwellwerte derart angepasst, dass eine größere Anzahl von Fahrzeug-zu-X-Botschaften als zuvor als "zu verwerfend" klassifiziert wird. Bei den Schwellwerten handelt es sich beispielsgemäß um eine Entfernung eines Absenders von Fahrzeug-zu-X-Botschaften zum Empfänger der Fahr-zeug-zu-X-Botschaften, also zur Fahr-zeug-zu-X-Kommunikationseinheit, und um ein Alter der Fahrzeug-zu-X-Botschaften. Indem die Schwellwerte für die Entfernung und für das Alter verringert werden, werden also mehr Fahrzeug-zu-X-Botschaften als zuvor als "zu verwerfend" klassifiziert. Gleichzeitig zu Schritt 107 erfolgt in Schritt 108 eine Anpassung von Klassifizierungsparametern in Form von Relevanzkriterien der bekannten Vorverarbeitung, wodurch sich die Anzahl zu verwerfender Fahrzeug-zu-X-Botschaften ebenfalls vergrößert. Beispielsgemäß handelt es sich bei den herangezogenen Relevanzkriterien um eine Richtung, aus der die Fahrzeug-zu-X-Botschaften empfangen werden und um eine Art der Fahrzeug-zu-X-Botschaften. Indem diese Relevanzkriterien derart angepasst werden, dass zusätzliche Richtungen und Arten von Fahrzeug-zu-X-Botschaften als Klassifizierungsparameter zu dem Ergebnis "zu verwerfend" führen, wird die Anzahl zu verarbeitender Fahrzeug-zu-X-Botschaften weiter reduziert bzw. die Anzahl zu verwerfender Fahrzeug-zu-X-Botschaften weiter erhöht. Bei der beschriebenen bekannten Vorverarbeitung handelt es sich um einen an sich bekannten Vorverarbeitungsprozess, welcher im Stand der Technik bekannt ist und den Zweck erfüllt, empfangene Fahrzeug-zu-X-Botschaften dahingehend zu klassifizieren bzw. vorzuverarbeiten, dass ein elektronische Rechenwerk ver-gleichsweise weniger Rechenleistung zur Verarbeitung der verbleibenden bzw. vorverarbeiteten Fahrzeug-zu-X-Botschaften aufwenden muss. Das erfindungsgemäße Verfahren greift somit teilweise in den bekannten Vorverarbeitungsprozess ein, indem es dessen Klassifizierungsparameter steuert. In Schritt 109 werden nun die als "zu verwerfend" klassifizierten Fahr-zeug-zu-X-Botschaften verworfen, was beispielsgemäß bedeutet, dass sie ohne weitere Verarbeitung gelöscht werden. In Verfahrensschritt 110 werden die als "zu verarbeitend" klassifizierten Fahrzeug-zu-X-Botschaften vom elektronischen Rechenwerk weiterverarbeitet und soweit erforderlich an die entsprechenden kommunikationsbasierten Assistenzsysteme weitergeführt.

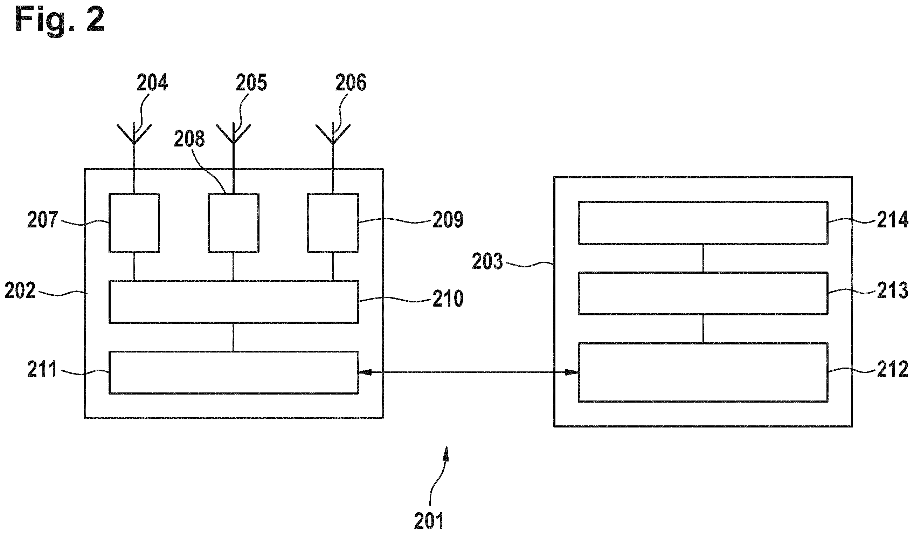

In Fig. 2 ist beispielhaft ein Funktionsblockdiagramm von erfindungsgemäßem System 201 zu sehen. System 201 besteht aus Kommunikationsblock 202 und Anwendungsblock 203. Sowohl Kommunikationsblock 202 als auch Anwendungsblock 203 umfassen jeweils ein eigenes, voneinander unabhängiges elektronisches Rechenwerk. Kommunikationsblock 202 umfasst weiterhin WLAN-Antenne 204, GPS-Antenne 205 und Mobilfunkantenne 206. Mittels WLAN-Antenne 204 und Mobilfunkantenne 206 werden Fahrzeug-zu-X-Botschaften empfangen und gesendet, während mit GPS-Antenne 205 GPS-Signale ausschließlich empfangen werden.

Antennen 204, 205 und 206 angegliedert sind jeweils zugehörige Auslesemittel 207, 208 und 209. Auslesemittel 207 und 209 sind außerdem dazu in der Lage, Fahrzeug-zu-X-Botschaften zu erstellen, welche dann mittels WLAN-Antenne 204 bzw. Mobilfunkantenne 206 versendet werden können. Auslesemittel 207, 208 und 209 sind funktionstechnisch gekoppelt mit Medienzugriffssteuerung 210, die auch als sog. "MAC-Layer" bekannt ist. Medienzugriffssteuerung 210 wiederum ist funktionstechnisch gekoppelt mit Funktionsblock 211, der das erfindungsgemäße Verfahren darstellt. Nachdem empfangene Fahrzeug-zu-X-Botschaften Funktionsblock 211 in ihrer Verarbeitungskette durchlaufen haben, werden die zu verarbeitenden Fahrzeug-zu-X-Botschaften an Netzwerkschicht 212 von Anwendungsblock 203 weitergeführt. Von Netzwerkschicht 212 werden die zu verarbeitenden Fahrzeug-zu-X-Botschaften weitergeführt an Datenverwaltungsblock 213, welcher sie schließlich an kommunikationsbasierte Assistenzsysteme 214 weiterleitet.

## Patentansprüche

1. Verfahren zur Bestimmung einer Anzahl zu verwerfender Fahrzeug-zu-X-Botschaften, wobei in einem Arbeitszyklus einer Fahrzeug-zu-X-Kommunikationseinheit Fahrzeug-zu-X-Botschaften empfangen werden, wobei in dem Arbeitszyklus eine Anzahl empfangener Fahrzeug-zu-X-Botschaften bestimmt wird und wobei in dem Arbeitszyklus eine vorhandene Rechenleistung zur Verfügung steht,
**dadurch gekennzeichnet, dass** unter Berücksichtigung der vorhandenen Rechenleistung in dem Arbeitszyklus die Bestimmung der Anzahl zu verwerfender Fahrzeug-zu-X-Botschaften nach Maßgabe der Anzahl empfangener Fahrzeug-zu-X-Botschaften erfolgt.

2. Verfahren nach Anspruch 1,
**dadurch gekennzeichnet, dass** Klassifizierungsparameter eines Vorverarbeitungsverfahrens in dem Arbeitszyklus derart angepasst werden, dass die bestimmte Anzahl zu verwerfender Fahrzeug-zu-X-Botschaften eine Anzahl zu verarbeitender Fahrzeug-zu-X-Botschaften hinterlässt, welche die vorhandene Rechenleistung in dem Arbeitszyklus ausschöpft ohne diese zu überschreiten.

3. Verfahren nach mindestens einem der Ansprüche 1 und 2,
**dadurch gekennzeichnet dass** die Klassifizierungsparameter über eine Anpassung von Schwellwerten angepasst werden.

4. Verfahren nach mindestens einem der Ansprüche 1 bis 3,
**dadurch gekennzeichnet, dass** die Klassifizierungsparameter über eine Anpassung von herangezogenen Relevanzkriterien angepasst werden.

5. Verfahren nach mindestens einem der Ansprüche 2 bis 4,
**dadurch gekennzeichnet, dass** die Klassifizierungsparameter für unterschiedliche kommunikationsbasierte Assistenzsysteme unterschiedlich angepasst werden.

6. Verfahren nach mindestens einem der Ansprüche 2 bis 5,
**dadurch gekennzeichnet, dass** die Klassifizierungsparameter eine Entfernung eines Absenders einer Fahrzeug-zu-X-Botschaft zu einem Empfänger der Fahrzeug-zu-X-Botschaft umfassen.

7. Verfahren nach mindestens einem der Ansprüche 2 bis 6,
**dadurch gekennzeichnet, dass** die Klassifizierungsparameter eine Empfangsfeldstärke der Fahrzeug-zu-X-Botschaft umfassen.

8. Verfahren nach mindestens einem der Ansprüche 2 bis 7,
**dadurch gekennzeichnet, dass** die Klassifizierungsparameter einen Erstellungszeitpunkt der Fahrzeug-zu-X-Botschaft um-fassen.

9. Verfahren nach mindestens einem der Ansprüche 2 bis 8,
**dadurch gekennzeichnet, dass** die Klassifizierungsparameter eine Richtung, aus der die Fahrzeug-zu-X-Botschaft empfangen wurde, umfassen.

10. Verfahren nach mindestens einem der Ansprüche 2 bis 9,
**dadurch gekennzeichnet, dass** die Klassifizierungsparameter eine Richtung eines in der Fahrzeug-zu-X-Botschaft beschriebenen Ereignisses umfassen.

11. Verfahren nach mindestens einem der Ansprüche 2 bis 10,
**dadurch gekennzeichnet, dass** die Klassifizierungsparameter eine Anzahl an Weiterleitungsprozessen vom Absender der Fahrzeug-zu-X-Botschaft bis zum Empfänger der Fahr-zeug-zu-X-Botschaft umfassen.

12. Verfahren nach mindestens einem der Ansprüche 1 bis 11,
**dadurch gekennzeichnet, dass** die Bestimmung der Anzahl zu verwerfender Fahrzeug-zu-X-Botschaften auf einem elektronischen Rechenwerk ausgeführt wird, welches unabhängig von einem die kommunikationsbasierten Assistenzsysteme ausführenden elektronischen Rechenwerk arbeitet.

13. System zur Bestimmung einer Anzahl zu verwerfender Fahrzeug-zu-X-Botschaften, umfassend eine Fahr-zeug-zu-X-Kommunikationseinheit und mindestens ein elektronisches Rechenwerk, wobei die Fahr-zeug-zu-X-Kommunikationseinheit in einem Arbeitszyklus Fahrzeug-zu-X-Botschaften empfängt,
wobei das System dazu ausgebildet ist, in dem Arbeitszyklus eine Anzahl empfangener Fahrzeug-zu-X-Botschaften in dem Arbeitszyklus zu bestimmen und wobei das elektronische Rechenwerk eine vorhandene Rechenleistung zur Verfügung stellt,
**dadurch gekennzeichnet, dass** das System dazu ausgebildet ist, unter Berücksichtigung der vorhandenen Rechenleistung in dem Arbeitszyklus die Bestimmung der Anzahl zu verwerfender Fahrzeug-zu-X-Botschaften nach Maßgabe der Vielzahl empfangener Fahrzeug-zu-X-Botschaften vorzunehmen.

14. System nach Anspruch 13,
**dadurch gekennzeichnet, dass** das System dazu ausgebildet ist, ein Verfahren nach mindestens einem der Ansprüche 1 bis 12 auszuführen.

15. Verwendung des Systems nach mindestens einem der Ansprüche 13 und 14 in einem Kraftfahrzeug.

## Claims

1. A method for determining a number of vehicle-to-X messages for rejection, wherein a work cycle of a vehicle-to-X communication unit involves vehicle-to-X messages being received, wherein the work cycle involves a number of received vehicle-to-X messages being determined, and wherein the work cycle involves an existent computation power being available, **characterised in that** taking into consideration the existent computation power in the work cycle the determination of number of vehicle-to-X messages for rejection takes place according to the number of vehicle-to-X messages received.

2. The method of claim 1, **characterised in that** classification parameters of a pre-processing method in the work cycle are adapted in such a way that the determined number of vehicle-to-X messages for rejection leaves behind a number of vehicle-to-X messages to be processed which exploits the available computation power in the work cycle without exceeding it.

3. The method of at least one of claims 1 and 2, **characterised in that** the classification parameters are adapted by means of an adaptation of threshold values.

4. The method of at least one of claims 1 to 3, **characterised in that** the classification parameters are adapted by means of an adaptation of relevance criteria used.

5. The method of at least one of claims 2 to 4, **characterised in that** the classification parameters are adapted differently for different communication-based assistance systems.

6. The method of at least one of claims 2 to 5, **characterised in that** the classification parameters comprise a distance from a sender of a vehicle-to-X message to a receiver of the vehicle-to-X message.

7. The method of at least one of claims 2 to 6, **characterised in that** the classification parameters comprise a reception field strength of the vehicle-to-X message.

8. The method of at least one of claims 2 to 7, **characterised in that** the classification parameters comprise a creation time of the vehicle-to-X message.

9. The method of one of claims 2 to 8, **characterised in that** the classification parameters comprise a direction from which the vehicle-to-X message was received.

10. The method of at least one of claims 2 to 9, **characterised in that** the classification parameters comprise a direction of an event described in the vehicle-to-X message.

11. The method of at least one of claims 2 to 10, **characterised in that** the classification parameters comprise a number of routing processes from the sender of the vehicle-to-X message as far as the receiver of the vehicle-to-X message.

12. The method of at least one of claims 1 to 11, **characterised in that** the determination of the number of vehicle-to-X messages for rejection is executed in an electronic calculation unit working independently of an electronic calculation unit executing the communications-based assistance systems.

13. A system for determining a number of vehicle-to-X messages for rejection, comprising a vehicle-to-X communication unit and at least one electronic calculation unit, wherein the vehicle-to-X communication unit receives vehicle-to-X messages in a work cycle, wherein the system is designed in the work cycle to determine a number of received vehicle-to-X messages in the work cycle and wherein the electronic calculation unit has an existent computation power available to it, **characterised in that** the system is designed, taking into consideration the existent computation power, in the work cycle to determine the number of vehicle-to-X messages for rejection according to the number of vehicle-to-X messages received.

14. The system of claim 13, **characterised in that** the system is designed in such a way as to execute a method of at least one of claims 1 to 12.

15. Use of the system of at least one of claims 13 and 14 in a motor vehicle.

## Revendications

1. Procédé pour la détermination d'un nombre de messages de véhicule à X devant être rejetés, des messages de véhicule à X étant reçus dans un cycle de travail d'une unité de communication de véhicule à X, un nombre de messages de véhicule à X reçus étant déterminé dans le cycle de travail et une puissance de calcul disponible étant à disposition dans le cycle de travail,
**caractérisé en ce que** la détermination du nombre de messages de véhicule à X devant être rejetés est effectuée sur la base du nombre de messages de véhicule à X reçus, en tenant compte de la puissance de calcul disponible dans le cycle de travail.

2. Procédé selon la revendication 1,
**caractérisé en ce que** des paramètres de classification d'un procédé de prétraitement sont ajustés dans le cycle de travail de telle sorte que le nombre déterminé de messages de véhicule à X devant être rejetés laisse un nombre de messages de véhicule à X devant être traités, lesquels épuisent la puissance de calcul existante dans le cycle de travail sans dépasser celle-ci.

3. Procédé selon au moins l'une des revendications 1 et 2, **caractérisé en ce que** les paramètres de classification sont ajustés par un ajustement de valeurs de seuil.

4. Procédé selon au moins l'une des revendications 1 à 3, **caractérisé en ce que** les paramètres de classification sont ajustés par un ajustement de critères de pertinence pris en compte à cette fin.

5. Procédé selon au moins l'une des revendications 2 à 4, **caractérisé en ce que** les paramètres de classification pour différents systèmes d'assistance basés sur la communication sont ajustés de façon différente.

6. Procédé selon au moins l'une des revendications 2 à 5, **caractérisé en ce que** les paramètres de classification comprennent une distance d'un émetteur d'un message de véhicule à X à un récepteur du message de véhicule à X.

7. Procédé selon au moins l'une des revendications 2 à 6, **caractérisé en ce que** les paramètres de classification comprennent une intensité de champ de réception du message de véhicule à X.

8. Procédé selon au moins l'une des revendications 2 à 7, **caractérisé en ce que** les paramètres de classification comprennent un instant de génération du message de véhicule à X.

9. Procédé selon au moins l'une des revendications 2 à 8, **caractérisé en ce que** les paramètres de classification comprennent une direction de laquelle le message de véhicule à X a été reçu.

10. Procédé selon au moins l'une des revendications 2 à 9, **caractérisé en ce que** les paramètres de classification comprennent une direction d'un événement décrit dans le message de véhicule à X.

11. Procédé selon au moins l'une des revendications 2 à 10, **caractérisé en ce que** les paramètres de classification comprennent un nombre de processus de transmission de l'émetteur du message de véhicule à X au récepteur du message de véhicule à X.

12. Procédé selon au moins l'une des revendications 1 à 11, **caractérisé en ce que** la détermination du nombre des messages de véhicule à X devant être rejetés est exécutée sur une unité de calcul électronique, laquelle travaille indépendamment d'une unité de calcul exécutant les systèmes d'assistance basés sur la communication.

13. Système pour la détermination d'un nombre de messages de véhicule à X devant être rejetés, comprenant une unité de communication de véhicule à X et au moins une unité de calcul électronique, l'unité de communication de véhicule à X recevant des messages de véhicule à X dans un cycle de travail.
le système étant formé afin de déterminer, dans le cycle de travail, un nombre de messages de véhicule à X reçus dans le cycle de travail, et l'unité de calcul électronique mettant à disposition une puissance de calcul disponible,
**caractérisé en ce que** le système est formé afin de procéder à la détermination du nombre de messages de véhicule à X devant être rejetés sur la base de la multiplicité de messages de véhicule à X reçus, en tenant compte de la puissance de calcul disponible dans le cycle de travail.

14. Système selon la revendication 13,
**caractérisé en ce que** le système est formé afin d'exécuter un procédé selon au moins l'une des revendications 1 à 12.

15. Utilisation du système selon au moins l'une des revendications 13 et 14 dans un véhicule.
